# EUROPÄISCHE PATENTSCHRIFT

(11) **EP 1 685 196 B1**
(45) Veröffentlichungstag und Bekanntmachung des Hinweises auf die Patenterteilung: **18.06.2014**
(21) Anmeldenummer: 04818824.7
(22) Anmeldetag: 08.11.2004
(51) Int. Cl.: C08L 101/10, C09D 183/04, C08K 3/34

(54) **HYDROLYSATE UND/ODER KONDENSATE VON EPOXID- UND SILANGRUPPEN ENTHALTENDEN OLIGOMEREN UND POLYMEREN, VERFAHREN ZU IHRER HERSTELLUNG UND IHRE VERWENDUNG**
OLIGOMERS AND POLYMERS CONTAINING HYDROLYSATES AND/OR CONDENSATES OF EPOXIDE GROUPS AND SILANE GROUPS, METHOD FOR THEIR PRODUCTION AND USE THEREOF
HYDROLYSATS ET/OU CONDENSATS D'OLIGOMERES ET POLYMERES CONTENANT DES GROUPES EPOXY ET SILANE, LEUR PROCEDE DE PRODUCTION ET LEUR UTILISATION

(30) Priorität: 17.11.2003 DE 10353507
(43) Veröffentlichungstag der Anmeldung: 02.08.2006
(73) Patentinhaber: BASF Coatings GmbH, 48165 Münster (DE)
(72) Erfinder: POPPE, Andreas, 97753 Karlstadt (DE); STÜBBE, Wilfried, 48268 Greven (DE); WESTHOFF, Elke, 48565 Steinfurt (DE); NIEMEIER, Manuela, 48317 Drensteinfurt (DE); MIKOLAJETZ, Dunja, 59387 Ascheberg (DE)
(74) Vertreter: Leifert & Steffan
(86) Internationale Anmeldenummer: PCT/EP2004/052920
(87) Internationale Veröffentlichungsnummer: WO 2005/049734

(56) Entgegenhaltungen:
- DE-A1- 3 716 417
- US-A- 6 008 285
- US-B1- 6 620 514

## Beschreibung

Die vorliegende Erfindung betrifft neue Hydrolysate und/oder Kondensate von Epoxid- und Silangruppen enthaltenden Oligomeren und Polymeren. Außerdem betrifft die vorliegende Erfindung ein neues Verfahren zur Herstellung von Hydrolysaten und/oder Kondensaten von Epoxid- und Silangruppen enthaltenden Oligomeren und Polymeren. Des Weiteren betrifft die vorliegende Erfindung die Verwendung der neuen Hydrolysate und/oder Kondensate von Epoxid- und Silangruppen enthaltenden Oligomeren und Polymeren sowie der nach dem neuen Verfahren hergestellten Hydrolysate und/oder Kondensate von Epoxid- und Silangruppen enthaltenden Oligomeren und Polymeren als neue härtbare Massen oder zur Herstellung neuer härtbarer Massen. Nicht zuletzt betrifft die vorliegende Erfindung die Verwendung der neuen härtbaren Massen für die Herstellung neuer gehärteter Massen, insbesondere von Beschichtungen und Lackierungen sowie von Formteilen, insbesondere von optischen Formteilen, und von freitragenden Folien.

Härtbare Massen auf der Basis von Hydrolysaten und/oder Kondensaten epoxyfunktioneller Silane sind z. B.aus den Patentanmeldungen EP 1 179 575 A 2, WO 00/35599 A, WO 99/52964 A, WO 99/54412 A, DE 197 26 829 A 1 oder DE 195 40 623 A 1 bekannt. Sie dienen insbesondere der Herstellung von hochkratzfesten Beschichtungen.

Härtbare Massen auf der Basis von Silanen, die mindestens eine olefinisch ungesättigte Gruppe, insbesondere eine Vinylgruppe oder eine Methacrylat- oder Acrylatgruppe enthalten, wie z. B. Vinyltrimethoxysilan oder Methacryloxypropyltrimethoxysilan (MPTS), sind aus den Patentanmeldungen WO 00/22052 A, WO 99/54412 A, DE 199 10 876 A 1 oder DE 197 19 948 A 1 bekannt.

Nach der internationalen Patentanmeldung WO 99/54412 A wird beispielsweise MPTS in der Gegenwart von gamma-AlO(OH)-Nanopartikeln hydrolysiert und/oder kondensiert. Das resultierenden Gel wird eingedampft und als Pulverklarlack verwendet. Die Härtung des applizierten Pulverklarlacks erfolgt thermisch.

Nach den Patentanmeldungen WO 00/22052 A, DE 199 10 876 A 1 oder DE 197 19 948 A 1 werden z. B. SiO₂-Nanopartikel mit MPTS silanisiert und mit mehrfachfunktionellen Acrylaten, wie z. B. Trimethylolpropantriacrylat, vermischt. Die resultierenden Suspensionen können mit UV-Strahlung oder Elektronenstrahlung polymerisiert werden.

Thermisch härtbare Massen auf der Basis von Copolymerisaten, die Epoxidgruppen und hydrolysierbar Silanlgruppen enthalten sind aus dem amerikanischen Patent US 4,772,672 A bekannt. Die härtbaren Massen müssen mit Hilfe von Aluminium- oder Zirkonium-Chelatkomplexen gehärtet werden. Den härtbaren Massen kann, bezogen auf ihre jeweilige Gesamtmenge, 0,1 bis 1 Gew.% Wasser zugesetzt werden, um die Härtung zu beschleunigen.

Die DE 37 16 417 A1 offenbart härtbare Zusammensetzungen, die ein Copolymer enthalten, welches als monomere Komponenten ein oxiranhaltiges Vinylmonomer und ein spezifisches alkoxysilanhaltiges Vinylmonomer umfasst und als vernetzendes Aushärtungsmittel mindestens eine Aluminiumchelatverbindung und/oder eine Zirkoniumchelatverbindung , die keine mit dem Zirkonium kombinierte Hydroxy- oder Alkoxygruppe aufweist. Die härtbaren Zusammensetzungen sind als Überzugszusammensetzungen verwendbar.

Die US 6,620,514 B1 betrifft ein Verfahren zur Herstellung einer Zusammensetzung zur Herstellung von nanostrukturierten Formen und Schichten, umfassend das Kontaktieren eines wässrigen und/oder alkoholischen Sols einer Verbindung eines Elementes aus Silicium und den Haupt- und Nebengruppenmetallen mit Verbindungen, die hydrolysierbare Alkoxygruppen und mindestens ein organisch modifiziertes Alkoxysilan oder ein davon abgeleitetes Vorkondensat aufweisen, unter Bedingungen, die zur (weiteren) Hydrolyse der Verbindungen führen und anschließendem Entfernen des gebildeten oder bereits enthaltenen Alkohols.

Ein wesentliches Ziel dieser Entwicklungen ist die Bereitstellung härtbarer Massen für die Herstellung gehärteter Massen, insbesondere von Beschichtungen und Lackierungen, sowie von Formteilen, insbesondere von optischen Formteilen, und von freitragenden Folien.

Die härtbaren Massen sollen einfach und sehr gut reproduzierbar herstellbar sein und bei der Verwendung in flüssigem Zustand einen Festkörpergehalt > 30 Gew.% haben, ohne dass dadurch ihre Transportfähigkeit, Lagerstabilität und Verarbeitbarkeit, insbesondere ihre Applizierbarkeit, in Mitleidenschaft gezogen werden.

Die härtbaren Massen sollen gehärtete Massen, insbesondere Beschichtungen und Lackierungen, speziell Klarlackierungen, Formteile, speziell optische Formteile, und frei tragende Folien liefern, die hoch kratzfest und chemikalienstabil sind. Insbesondere sollen sich die Beschichtungen und Lackierungen, speziell die Klarlackierungen, auch in Schichtdicken > 40 µm herstellen lassen, ohne dass Spannungsrisse auftreten. Dies ist eine wesentliche Voraussetzung für die Verwendung der Beschichtungen und Lackierungen, insbesondere der Klarlackierungen, in dem technologisch und ästhetisch besonders anspruchsvollen Gebiet der Automobilserienlackierung (OEM). Dabei müssen sie vor allem eine besonders hohe Waschstraßenbeständigkeit aufweisen, die sich in dem für die Praxis relevanten AMTEC-Waschstraßentest durch einen Restglanz (20 °) nach DIN 67530 > 70% des Ausgangsglanzes bemerkbar macht.

Die bisher bekannten härtbaren und gehärteten Massen können aber dieses Anforderungsprofil nicht in vollem Umfang erfüllen.

Aufgabe der vorliegenden Erfindung ist es, neue Epoxid- und Silangruppen enthaltende Stoffe bereitzustellen, die die Herstellung neuer härtbarer und gehärteter Massen gestatten, die das vorstehend geschilderte Anforderungsprofil in vollem Umfang erfüllen. Darüber hinaus sollen die neuen Epoxid- und Silangruppen enthaltenden Stoffe einfach und sehr gut reproduzierbar herstellbar sein, keine ökologischen Probleme bereiten und daher auch keiner chemikalienrechtlichen Zulassung bedürfen.

Demgemäß wurden die Hydrolysate und/oder Kondensate von Epoxid- und Silangruppen enthaltenden Oligomeren und Polymeren (A) gefunden, wobei die Oligomere und Polymere (A) aus der Gruppe der Copolymerisate olefinisch ungesättigter Monomere ausgewählt sind und die Hydrolysate und/oder Kondensate herstellbar sind, indem man mindestens ein mindestens eine Epoxidgruppe (a1) und mindestens eine hydrolysierbare Silangruppe (a2) enthaltendes Oligomer und/oder Polymer (A) bei einem pH-Wert < 7 hydrolysiert und/oder kondensiert, und wobei die Hydrolysate und/oder Kondensate in Gegenwart mindestens einer Art von kationisch stabilisierten Nanopartikeln hergestellt sind.

Im Folgenden werden die neuen Hydrolysate und/oder Kondensate von Epoxid- und Silangruppen (a1) und (a2) enthaltenden Oligomeren und Polymeren (A) als »erfindungsgemäße Hydrolysate und/oder Kondensate« bezeichnet.

Außerdem wurde das neue Verfahren zur Herstellung der erfindungsgemäßen Hydrolysate und/oder Kondensate gefunden, bei dem man die Oligomeren und/oder Polymeren (A) bei einem pH-Wert < 7 hydrolysiert und/oder kondensiert und das im Folgenden als »erfindungsgemäßes Verfahren« bezeichnet wird.

Nicht zuletzt wurde die neue Verwendung der erfindungsgemäßen Hydrolysate und/oder Kondensate und der nach dem erfindungsgemäßen Verfahren hergestellten Hydrolysate und/oder Kondensate als härtbare Massen oder zu deren Herstellung gefunden, was im folgenden als »erfindungsgemäße Verwendung« bezeichnet wird.

Weitere Erfindungsgegenstände gehen aus der Beschreibung hervor.

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Hydrolysate und/oder Kondensate, des erfindungsgemäßen Verfahrens und der erfindungsgemäßen Verwendung gelöst werden konnte.

Vor allem war es überraschend, dass die erfindungsgemäßen Hydrolysate und/oder Kondensate - insbesondere mit Hilfe des erfindungsgemäßen Verfahrens - besonders einfach und sehr gut reproduzierbar herstellbar waren, wobei handelsübliche Ausgangsprodukte eingesetzt werden konnten, keine ökologischen Probleme bereiteten und daher auch keiner chemikalienrechtlichen Zulassung bedurften.

Außerdem war es überraschend, dass die erfindungsgemäßen Hydrolysate und/oder Kondensate hervorragend als neue härtbare Massen oder als Ausgangsprodukte für die Herstellung neuer härtbarer Massen geeignet waren.

Die erfindungsgemäßen härtbaren Massen waren einfach und sehr gut reproduzierbar herstellbar und konnten bei der Verwendung in flüssigem Zustand auf Festkörpergehalte > 30 Gew.-% eingestellt werden, ohne dass dadurch ihre sehr gute Transportfähigkeit, Lagerstabilität und Verarbeitbarkeit, insbesondere ihre Applizierbarkeit, in Mitleidenschaft gezogen wurden. Überraschenderweise konnten sie auch ohne Aluminium- oder Zirkonium-Chelatkomplexe rasch vollständig gehärtet werden.

Die erfindungsgemäßen härtbaren Massen lieferten neue gehärtete Massen, insbesondere Beschichtungen und Lackierungen, speziell Klarlackierungen, Formteile, speziell optische Formteile, und frei tragende Folien, die hoch kratzfest und chemikalienstabil waren. Insbesondere ließen sich die erfindungsgemäßen Beschichtungen und Lackierungen, speziell die Klarlackierungen, auch in Schichtdicken > 40 µm herstellen, ohne dass Spannungsrisse auftraten. Deswegen konnten die erfindungsgemäßen Beschichtungen und Lackierungen, insbesondere die Klarlackierungen, in dem technologisch und ästhetisch besonders anspruchsvollen Gebiet der Automobilserienlackierung (OEM) eingesetzt werden. Dabei zeichneten sie sich vor allem durch eine besonders hohe Waschstraßenbeständigkeit und Kratzfestigleit aus, was anhand des für die Praxis relevanten AMTEC-Waschstraßentests durch einen Restglanz (20 °) nach DIN 67530 > 70% des Ausgangsglanzes untermauert werden konnte.

Die erfindungsgemäßen Hydrolysate und/oder Kondensate sind herstellbar, indem man Epoxidgruppen und hydrolysierbare Silangruppen enthaltende Oligomere und/oder Polymere (A) vorzugsweise im Rahmen des sogenannten Sol-Gel-Verfahrens hydrolysiert und/oder kondensiert. Dessen Basisreaktionen lassen sich anhand der Tetraorthosilikate erläutern. Diese werden gegebenenfalls in Gegenwart eines Co-Lösemittels hydrolysiert und hydrolysiert und/oder kondensiert:

### Hydrolyse

Si(OR')₄ + H₂O → (R'O)₃Si-OH + R'OH

### Hydrolyse und/oder Kondensation

-Si-OH + HO-Si- → -Si-O-Si- + H₂O

-Si-OH + R'O-Si- → -Si-O-Si- + R'OH,

wobei R' eine Alkylgruppe, wie Methyl oder Ethyl, sein kann. Zur Katalyse der Reaktionen werden Säuren, Basen oder Fluoridionen eingesetzt.

Die Oligomeren (A) enthalten im statistischen Mittel mehr als 2 und nicht mehr als 15 eingebaute Monomereinheiten. Im Allgemeinen enthalten die Polymeren (A) mehr als 10, vorzugsweise mehr 15, eingebaute Monomereinheiten.

Die erfindungsgemäßen Hydrolysate und/oder Kondensate sind jeweils aus mindestens einem, insbesondere einem, Oligomer (A) oder Polymer (A) herstellbar. Für besondere Anwendungszwecke können aber auch Gemische aus mindestens zwei unterschiedlichen Oligomeren (A), Polymeren (A) oder Oligomeren und Polymeren (A) eingesetzt werden.

Die Oligomeren und Polymeren (A) enthalten jeweils mindestens eine Epoxidgruppe (a1) und mindestens eine im o. g. Sinne hydrolysierbare Silangruppe (a2). Vorzugsweise enthalten sie im statistischen Mittel mindestens zwei, insbesondere mindestens drei, Epoxidgruppen (a1) und mindestens zwei, insbesondere mindestens drei, hydrolysierbare Silangruppen (a2). Dabei kann es sich um terminale und/oder laterale Epoxidgruppen (a1) und hydrolysierbare Silangruppen (a2) handeln.

Die Oligomeren und Polymeren (A) können einen linearen, sternförmig oder dendrimer verzweigten oder kammförmigen Aufbau haben. Innerhalb eines Oligomeren oder Polymeren (A) können diese Strukturen miteinander kombiniert vorliegen. Dabei können die Monomereinheiten statistisch, alternierend oder blockartig verteilt vorliegen, wobei innerhalb eines Oligomeren oder Polymeren (A) diese Verteilungen miteinander kombiniert vorliegen können.

Die zahlenmittleren und massenmittleren Molekulargewichte und die Uneinheitlichkeit des Molekulargewichts der Oligomeren und Polymeren (A) können breit varüeren und richten sich nach den Erfordernissen des Einzelfalls. Vorzugsweise liegt das zahlenmittlere Molekulargewicht bei 800 bis 3.000, bevorzugt 1.000 bis 2.500 und insbesondere 1.000 bis 2.000 Dalton. Vorzugsweise liegt das massenmittlere Molekulargewicht bei 1.000 bis 8.000, bevorzugt 1.500 bis 6.500 und insbesondere 1.500 bis 6.000 Dalton. Vorzugsweise ist Uneinheitlichkeit < 10, bevorzugt < 8 und insbesondere < 5.

Die Oligomeren und Polymeren (A) sind Copolymerisate olefinisch ungesättigter Monomere.

Die Epoxidgruppen (a1) sind mit der Hauptkette oder den Hauptketten der Oligomeren und Polymeren (A) über verknüpfende, organische Gruppen (G1) kovalent verbunden. Dabei kann eine Epoxidgruppe (a1) über eine zweibindige, verknüpfende, organische Gruppe (G1) oder es können mindestens zwei Epoxidgruppen (a1) über eine mindestens dreibindige, verknüpfende, organische Gruppe (G1) mit der Hauptkette verknüpft sein. Bevorzugt ist eine Epoxidgruppe (a1) über eine zweibindige, verknüpfende, organische Gruppe (G1) mit der Hauptkette verknüpft.

Vorzugsweise enthalten die zweibindigen, verknüpfenden, organischen Gruppen (G1) mindestens eine, insbesondere eine, mindestens zweibindige, insbesondere zweibindige, Gruppe (G11), ausgewählt aus der Gruppe, bestehend aus substituierten und unsubstituierten, vorzugsweise unsubstituierten, verzweigten und unverzweigten, vorzugsweise unverzweigten, cyclischen und nicht cyclischen, vorzugsweise nicht cyclischen, Alkyl-, Alkenyl- und Alkinylgruppen, insbesondere Alkylgruppen, sowie substituierten und unsubstituierten, vorzugsweise unsubstituierten, Arylgruppen, oder sie bestehen hieraus.

Insbesondere ist die zweibindige Gruppe (G11) eine unverzweigte, nicht cyclische, unsubstituierte, zweibindige Alkylgruppe mit 1 bis 10, vorzugsweise 2 bis 6 und insbesondere 1 bis 4 Kohlenstoffatomen, wie eine Methylen-, Ethylen-, Trimethylen- oder Tetramethylengruppe.

Bevorzugt enthalten die zweibindigen, verknüpfenden, organischen Gruppen (G1) darüber hinaus noch mindestens eine, insbesondere eine, mindestens zweibindige, insbesondere zweibindige, verknüpfende, funktionelle Gruppe (G12), vorzugsweise ausgewählt aus der Gruppe, bestehend aus Ether-, Thioether-, Carbonsäureester-, Thiocarbonsäureester-, Carbonat-, Thiocarbonat-, Phosphorsäureester-, Thiophosphorsäureester-, Phosphonsäureester-, Thiophosphonsäureester-, Phosphit-, Thiophosphit-, Sulfonsäureester-, Amid-, Amin-, Thioamid-, Phosphorsäureamid-, Thiophosphorsäureamid-, Phosphonsäureamid-, Thiophosphonsäureamid-, Sulfonsäureamid-, Imid-, Hydrazid-, Urethan-, Harnstoff-, Thioharnstoff-, Carbonyl-, Thiocarbonyl-, Sulfon- oder Sulfoxidgruppen, insbesondere Carbonsäureestergruppen.

Beispiele geeigneter Substituenten sind Halogenatome, insbesondere Fluoratome und Chloratome, Nitrilgruppen, Nitrogruppen oder Alkoxygruppen. Vorzugsweise sind die vorstehend beschriebenen Gruppen (G1) und (G11) unsubstituiert.

Bevorzugt sind die Epoxidgruppen (a1) über eine Gruppe (G11) und diese wiederum über eine Gruppe (G12), besonders bevorzugt gemäß der allgemeinen Formel I:

**-(-G12)-(G11-)-Epoxid** **(I)**,

mit der Hauptkette verbunden. Insbesondere wird als Gruppe der allgemeinen Formel I

**-C(O)-O-CH₂-Epoxid** **(I1)**

verwendet.

Die hydrolysierbaren Silangruppen (a1) können unterschiedliche Strukturen aufweisen. Vorzugsweise werden sie aus der Gruppe, bestehend aus hydrolysierbaren Silangruppen (a2) der allgemeinen Formel II:

**-SiRₘR¹ₙ** **(II)**,

ausgewählt.

In der allgemeinen Formel II haben die Indices und die Variablen die folgende Bedeutung haben:
- R: einbindiges, hydrolysierbares Atom oder einbindige, hydrolysierbare Gruppe;
- R¹: einbindiger, nicht hydrolysierbarer Rest;
- m: ganze Zahl von 1 bis 3, vorzugsweise 3, und
- n: 0 oder 1 oder 2 , vorzugsweise 0 oder 1,
mit der Maßgabe, dass m + n = 3.

Beispiele geeigneter, einbindiger, hydrolysierbarer Atome R sind Wasserstoff, Fluor, Chlor, Brom und lod.

Beispiele geeigneter, einbindiger, hydrolysierbarer Reste R sind Hydroxylgruppen, Aminogruppen -NH₂ und Gruppen der allgemeinen Formel III:

**R¹-X-** **(III),**

worin die Variablen die folgende Bedeutung haben:
- X: Sauerstoffatom, Schwefelatom, Carbonylgruppe, Thiocarbonylgruppe, Carboxylgruppe, Thiocarbonsäure-S-estergruppe, Thiocarbonsäure-O-estergruppe oder Aminogruppe - NH- oder -NR¹-, vorzugsweise Sauerstoffatom; und
- R¹: einbindiger, organischer Rest.

Der einbindige, organische Rest R¹ enthält mindestens eine Gruppe (G2), ausgewählt aus der Gruppe, bestehend aus substituierten und unsubstituierten, vorzugsweise unsubstiuierten, verzweigten und unverzweigten, vorzugsweise unverzweigten, cyclischen und nicht cyclischen, vorzugsweise nicht cyclischen, Alkyl-, Alkenyl- und Alkinylgruppen, vorzugsweise Alkylgruppen, sowie substituierten und unsubstituierten Arylgruppen; insbesondere unsubstituierten, unverzweigten, nicht cyclischen Alkylgruppen; oder er besteht hieraus.

Beispiele geeigneter Substituenten sind die vorstehend genannten.

Besteht der Rest R¹ aus einer Gruppe (G2), ist diese einbindig.

Enthält der Rest R¹ eine Gruppe (G2), ist diese mindestens zweibindig, insbesondere zweibindig, und direkt mit -X- verknüpft. Darüber hinaus kann der Rest R¹ noch mindestens eine, insbesondere eine, der vorstehend beschriebenen Gruppen (G12) enthalten.

Enthält der Rest R¹ mindestens zwei Gruppen (G2), ist mindestens eine von ihnen mindestens zweibindig, insbesondere zweibindig, und direkt mit -X- verknüpft. Diese direkt mit -X- verknüpfte Gruppe (G2) ist mit mindestens einer weiteren Gruppe (G2) verknüpft. Vorzugsweise ist diese direkt mit -X- verknüpfte Gruppe (G2) mit der weiteren Gruppe (G2) über eine Gruppe (G12) oder den weiteren Gruppen (G2) über mindestens zwei Gruppen (G12) verknüpft.

Bevorzugt besteht der Rest R¹ aus einer Gruppe (G2). Insbesondere wird der Rest R¹ aus der Gruppe, bestehend aus Methyl, Ethyl, Propyl und Butyl ausgewählt.

Insbesondere werden die hydrolysierbaren Silangruppen (a2) aus der Gruppe, bestehend aus Methyldiethoxysilyl, Trimethoxysilyl, Triethoxysilyl, Tripropoxysilyl und Tributoxysilyl, insbesondere Trimethoxysilyl und Triethoxysilyl, ausgewählt.

Die hydrolysierbaren Silangruppen (a2) sind mit der Hauptkette oder den Hauptketten der Oligomeren und Polymeren (A) vorzugsweise über die vorstehend beschriebenen, verknüpfenden, organischen Gruppen (G1) kovalent verbunden. Dabei kann eine hydrolysierbare Silangruppe (a2) über eine zweibindige, verknüpfende, organische Gruppe (G1) oder es können mindestens zwei hydrolysierbare Silangruppen (a2) über eine mindestens dreibindige, verknüpfende, organische Gruppe (G1) mit der Hauptkette verknüpft sein. Bevorzugt ist eine hydrolysierbare Silangruppe (a2) über eine zweibindige, verknüpfende, organische Gruppe (G1) mit der Hauptkette verknüpft.

Vorzugsweise enthalten auch hier die einbindigen, verknüpfenden, organischen Gruppen (G1) mindestens eine, insbesondere eine, der vorstehend beschriebenen, mindestens zweibindigen, insbesondere zweibindigen, Gruppen (G11) oder sie bestehen hieraus. Bevorzugt enthalten die zweibindigen, verknüpfenden, organischen Gruppen (G1) darüber hinaus noch mindestens eine, insbesondere eine, der vorstehend beschriebenen, mindestens zweibindigen, insbesondere zweibindigen, verknüpfenden, funktionellen Gruppe (G12).

Bevorzugt sind die Silangruppen (a2) über eine zweibindige, verküpfende Gruppe (G11) und diese wiederum über eine zweibindige, verknüpfende, funktionelle Gruppe (G12) gemäß der allgemeinen Formel (IV):

**-(-G12-)-(G11-)-SiRₘR¹ₙ** **(IV)**,

worin die Indizes und die Variablen die vorstehend angegebene Bedeutung haben, mit der Hauptkette der Oligomeren und Polymeren (A) verknüpft. Ganz besonders bevorzugt werden die folgenden Gruppen der allgemeinen Formel IV verwendet:

**-C(O)-O-(-CH₂-)₂-Si(OCH₃)₃** (IV1),

**-C(O)-O-(-CH₂-)₃-Si(OCH₃)₃** (IV2),

**-C(O)-O-(-CH₂-)₂-Si(OC₂H₅)₃** (IV3)

**-C(O)-O-(-CH₂-)₃-Si(OC₂H₅)₃** (IV4),

**-C(O)-O-CH₂-Si(OC₂H₅)₃** (IV5)

und

**-C(O)-O-CH₂-SiCH₃(OC₂H₅)₂** (IV6),

insbesondere (IV4).

Das Molverhältnis von Epoxidgruppen (a1) zu hydrolysierbaren Silangruppen (a2) in den Oligomeren und Polymeren (A) kann breit variieren. Vorzugsweise liegt es bei 1,5 : 1 bis 1 : 1,5, bevorzugt 1,3 : 1 bis 1 : 1,3 und insbesondere 1,1 : 1 bis 1 : 1,1.

Ganz besonders vorteilhaft sind die (Meth)Acrylatcopolymerisate (A), die laterale und/oder terminale Epoxidgruppen (a1) und laterale und/oder terminale, hydrolysierbare Silangruppen (a2) der allgemeinen Formel II:

**-SiRₘR¹ₙ** (II),

worin die Indices und die Variablen die vorstehend angegebene Bedeutung haben, im Molverhältnis von (a1) : (a2) = 1,5 : 1 bis 1 : 1,5, bevorzugt 1,3 : 1 bis 1 : 1,3 und insbesondere 1,1 : 1 bis 1 : 1,1, enthalten. Diese erfindungsgemäßen (Meth)Acrylatcopolymerisate (A) liefern ganz besonders vorteilhafte erfindungsgemäße Hydrolysate und/oder Kondensate.

Neben den vorstehend beschriebenen Epoxidgruppen (a1) und Silangruppen (a2) können die Oligomeren und Polymeren (A) noch weitere laterale und/oder terminale Gruppen (a3) enthalten. Wesentlich ist, dass die Gruppen (a3) weder mit den Epoxidgruppen (a1) und Silangruppen (a2) reagieren, noch den Ablauf der Hydrolyse und/oder Kondensation stören. Beispiele geeigneter Gruppen (a3) sind Fluoratome, Chloratome, Nitrilgruppen, Nitrogruppen, Alkoxygruppen, Polyoxyalkylengruppen oder die vorstehend beschriebenen, einbindigen, organischen Reste R¹, insbesondere Arylgruppen, Alkylgruppen und Cycloalkylgruppen. Mit Hilfe dieser Gruppe (a3) kann das Eigenschaftsprofil der Oligomeren und Polymeren (A) und damit der erfindungsgemäßen Hydrolysate und/oder Kondensate in vorteilhafter Weise breit variiert werden.

Die Oligomeren und Polymeren (A) sind durch Copolymerisation mindestens eines, insbesondere eines, mindestens eine, insbesondere eine, Epoxidgruppe (a1) enthaltenden Monomeren (a1) mit mindestens einem, insbesondere einem, mindestens eine, insbesondere eine, Silangruppe (a2) enthaltenden Monomeren (a2) herstellbar. Dabei können die Monomeren (a2) und (a3) noch mit mindestens einem Monomeren (a3), das mindestens eine Gruppe (a3) enthält, copolymerisiert werden.

Besondere Vorteile resultieren, wenn die Monomeren (a1) und (a2) in einem Molverhältnis von (a1) : (a2) = 1,5 : 1 bis 1 : 1,5, bevorzugt 1,3 : 1 bis 1 : 1,3 und insbesondere 1,1 : 1 bis 1 : 1,1 miteinander copolymerisiert werden. Ganz besondere Vorteile werden erhalten, wenn hierbei das vorstehend beschriebene Molverhältnis von Epoxidgruppen (a1) zu hydrolysierbaren Silangruppen (a2) in den Oligomeren und Polymeren (A) resultiert.

Die Monomeren (a1), (a2) und (a3) enthalten mindestens eine, insbesondere eine, olefinisch ungesättigte Gruppe.

Beispiele geeigneter, olefinisch ungesättigter Gruppen sind (Meth)Acrylat-, Ethacrylat-, Crotonat-, Cinnamat-, Vinylether-, Vinylester-, Dicyclopentadienyl-, Norbomenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbomenyl-, Isoprenyl-, Isopropenyl-, Allyl- oder Butenylestergruppen, bevorzugt Methcrylatgruppen und Acrylatgruppen, insbesondere Methacrylatgruppen.

Beispiele geeigneter Monomere (a1) sind aus dem amerikanischen Patent US 4,772,672 A, Spalte 5, Zeile 7, bis Spalte 6, Zeile 66, bekannt. Ein Beispiel für ein besonders gut geeignetes Monomer (a1) ist Glycidylmethacrylat.

Beispiele geeigneter Monomere (a2) sind aus dem amerikanischen Patent US 4,772,672 A, Spalte 2, Zeile 52, bis Spalte 5, Zeile 5 bekannt. Ein Beispiel für ein besonders gut geeignetes Monomer (a2) ist Methacryloxypropyltrimethoxysilan (MPTS), das unter der Marke Dynasilan ® MEMO von der Firma Degussa vertrieben wird, oder Methacryloxymethyltriethoxysilan oder Methacryloxymethyl-methyldiethoxysilan, die unter den Marken Geniosil ® XL 34 und Geniosil ® XL 36 von der Firma Wacker vertrieben werden.

Beispiele geeigneter Monomere (a3) werden in der internationalen Patentanmeldung WO 03/016411, Seite 24, Zeilen 9, bis Seite 28, Zeile 8, beschrieben.

Vorzugsweise sind die Oligomeren und Polymeren (A) in an sich bekannter Weise durch radikalische Copolymerisation der Monomeren (a1) und (a2) sowie gegebenenfalls (a3), bevorzugt in Masse oder in Lösung, insbesondere in Lösung, herstellbar.

Die erfindungsgemäßen Hydrolysate und/oder Kondensate werden vorzugsweise mit Hilfe des erfindungsgemäßen Verfahren hergestellt.

Dazu werden die vorstehend beschriebenen Oligomeren und/oder Polymeren (A) bei einem pH-Wert < 7 hydrolysiert und/oder kondensiert. Die Hydrolyse und/oder Kondensation erfolgt in einem Sol-Gel-Verfahren durch die Umsetzung mit Wasser in der Gegenwart einer organischen oder anorganischen Säure, vorzugsweise einer organischen Säure, insbesondere Essigsäure. Vorzugsweise wird die Hydrolyse und/oder Kondensation bei -10 bis + 50, bevorzugt 0 bis + 40 und insbesondere + 10 bis + 30 °C durchgeführt.

Die Hydrolyse und/oder Kondensation wird in Gegenwart von kationisch stabilisierten Nanopartikeln durchgeführt und kann in der Gegenwart von üblichen und bekannten, hydrolysierbaren, niedermolekularen Silanen und/oder hydrolysierbaren Metallalkoxiden, wie sie beispielsweise in der deutschen Patentanmeldung DE 199 40 857 A 1 beschrieben werden, und/oder Nanopartikeln, insbesondere Nanopartikeln, durchgeführt werden.

Vorzugsweise werden die Nanopartikel aus der Gruppe, bestehend aus Metallen, Verbindungen von Metallen und organischen Verbindungen, vorzugsweise Verbindungen von Metallen, ausgewählt.

Vorzugsweise werden die Metalle aus der dritten bis fünften Hauptgruppe, der dritten bis sechsten sowie der ersten und zweiten Nebengruppe des

Periodensystems der Elemente sowie den Lanthaniden, und bevorzugt aus der Gruppe, bestehend aus Bor, Aluminium, Gallium, Silizium, Germanium, Zinn, Arsen, Antimon, Silber, Zink, Titan, Zirkonium, Hafnium, Vanadium, Niob, Tantal, Molybdän, Wolfram und Cer, ausgewählt. Insbesondere werden Aluminium und Silizium verwendet.

Vorzugsweise handelt es sich bei den Verbindungen der Metalle um Oxide, Oxidhydrate, Sulfate, Hydroxide oder Phosphate, insbesondere Oxide, Oxidhydrate und Hydroxide.

Beispiele geeigneter organischer Verbindungen sind Lignine und Stärken.

Vorzugsweise weisen die Nanopartikel eine Primärpartikelgröße <50, bevorzugt 5 bis 50, insbesondere 5 bis 30 nm auf.

Die erfindungsgemäßen Hydrolysate und/oder Kondensate, die in der Gegenwart von Nanopartikeln hergestellten erfindungsgemäßen Hydrolysate und/oder Kondensate, können als solche als härtbare Massen verwendet werden.

Darüber hinaus können die erfindungsgemäßen Hydrolysate und/oder Kondensate, die in der Gegenwart von Nanopartikeln hergestellten erfindungsgemäßen Hydrolysate und/oder Kondensate, zur Herstellung härtbarer Massen verwendet werden.

Überraschenderweise können die vorstehend beschriebenen Nanopartikel, wenn sie kationisch stabilisiert sind, als Katalysatoren für die Vernetzung der erfindungsgemäßen Hydrolysate und/oder Kondensate bzw. der erfindungsgemäßen härtbaren Massen dienen.

Als Katalysatoren können den erfindungsgemäßen Hydrolysaten und/oder Kondensaten bzw. den erfindungsgemäßen härtbaren Massen auch noch Verbindungen von Metallen mit mindestens einer organischen, vorzugsweise nichtaromatischen Verbindung, die Chelatliganden zu bilden vermag, als Katalysatoren zugesetzt werden. Bei den Chelatliganden bildenden Verbindungen handelt es sich um organische Verbindungen mit mindestens zwei funktionellen Gruppen, die an Metallatome oder -ionen koordinieren können. Üblicherweise handelt es sich bei diesen funktionellen Gruppen um Elektronendonatoren, welche Elektronen an Metallatome oder -ionen als Elektronenakzeptoren abgeben. Es sind grundsätzlich alle organischen Verbindungen der genannten Art geeignet, solange sie nicht die Vernetzung der erfindungsgemäßen härtbaren Massen zu gehärteten erfindungsgemäßen Massen nachteilig beeinflussen oder gar völlig verhindern. Beispiele geeigneter organischer Verbindungen sind Dimethylglyoxim oder Verbindungen, die Carbonylgruppen in 1,3-Stellung enthalten, wie Acetylaceton oder Acetessigsäureethylester. Ergänzend wird auf Römpp Chemie Lexikon, Georg Thieme Verlag, Stuttgart, 1989, Band 1 ,Seite 634, verwiesen. Es können auch die Aluminium- und Zirkonium-Chelatkomplexe, wie sie beispielsweise in dem amerikanischen Patent US 4,772,672 A, Spalte 8, Zeile 1, bis Spalte 9, Zeile 49, beschrieben werden, als Katalysatoren verwendet werden. Es ist aber ein besonderer Vorteil der erfindungsgemäßen härtbaren Massen, dass sie auch ohne die Verwendung von Chelatkomplexen rasch und vollständig ausgehärtet werden können.

Des Weiteren können den erfindungsgemäßen Hydrolysaten und/oder Kondensaten bzw. den erfindungsgemäßen härtbaren Massen übliche und bekannte Katalysatoren für die Vernetzung der Epoxidgruppen, wie Lewissäuren, Aluminium- oder Zinnverbindungen von Aminen oder Heterocyclen, zugesetzt werden, wie sie beispielsweise in dem Buch von Bryan Ellis, »Chemistry and Technology of Epoxy Resins«, University of Sheffield, Blackie Academic & Professional, beschrieben werden.

Außerdem können ihnen übliche und bekannte, lacktypische Bestandteile zugesetzt werden. Beispiele geeigneter Bestandteile werden beispielsweise in der internationalen Patentanmeldung WO 03/016411, Seite 14, Zeile 9, bis Seite 35, Zeile 31, beschrieben.

Die Herstellung der erfindungsgemäßen härtbaren Massen weist keine methodischen Besonderheiten auf, sondern kann mit Hilfe der in der internationalen Patentanmeldung WO 03/016411, Seite 36, Zeilen 13 bis 20, beschriebenen Verfahren und Vorrichtungen durchgeführt werden.

Die erfindungsgemäßen härtbaren Massen enthalten übliche und bekannte organische Lösemittel (vgl. die internationale Patentanmeldung WO 03/016411, Seite 35, Zeilen 12 bis 14) sowie vorzugsweise Wasser. Dies ist ein besonderer Vorteil der flüssigen erfindungsgemäßen härtbaren Massen, dass sie einen Festkörpergehalt > 30 Gew.-%" aufweisen können, ohne dass dadurch ihre sehr gute Transportfähigkeit, Lagerstabilität und Verarbeitbarkeit, insbesondere ihre Applizierbarkeit, in Mitleidenschaft gezogen werden.

Die erfindungsgemäßen härtbaren Massen dienen der Herstellung der erfindungsgemäßen gehärteten Massen. Vorzugsweise werden sie dabei als pigmentierte und nicht pigmentierte Beschichtungsstoffe, insbesondere Klarlacke, sowie als Ausgangsprodukte für Formteile, insbesondere optische Formteile, und freitragenden Folie eingesetzt.

Vorzugsweise sind die erfindungsgemäßen gehärteten Massen pigmentierte und nicht pigmentierte Beschichtungen und Lackierungen, bevorzugt transparente, insbesondere klare, Klarlackierungen, Formteile, insbesondere optische Formteile, und freitragende Folien. Ganz besonders bevorzugt sind die erfindungsgemäßen gehärteten Massen Klarlackierungen sowie Klarlackierungen im Rahmen von farb- und/oder effektgebenden Mehrschichtlackierungen auf üblichen und bekannten Substraten (vgl. hierzu die internationale Patentanmeldung WO 03/016411, Seite 41, Zeile 6, bis Seite 43, Zeile 6, i. V. m. Seite 44, Zeile 6, bis Seite 45, Zeile 6).

Die Herstellung der erfindungsgemäßen gehärteten Massen aus den erfindungsgemäßen härtbaren Massen weist keine methodischen Besonderheiten auf, sondern wird mit Hilfe üblicher und bekannter Verfahren und Vorrichtungen, die für die jeweilige erfindungsgemäße gehärtete Masse typisch sind, durchgeführt.

Insbesondere werden die erfindungsgemäßen härtbaren Beschichtungsstoffe mit Hilfe der in der internationalen Patentanmeldung WO 03/016411, Seite 37, Zeilen 4 bis 24, beschriebenen, üblichen und bekannten Verfahren und Vorrichtungen auf Substrate appliziert.

Die Härtung der erfindungsgemäßen härtbaren Massen kann, wie in der internationalen Patentanmeldung WO 03/016411, Seite 38, Zeile 1, bis Seite 41, Zeile 4, beschrieben, durchgeführt werden.

Die erfindungsgemäßen härtbaren Massen liefern neue gehärtete Massen, insbesondere Beschichtungen und Lackierungen, speziell Klarlackierungen, Formteile, speziell optische Formteile, und freitragende Folien, die hoch kratzfest und chemikalienstabil sind. Insbesondere lassen sich die erfindungsgemäßen Beschichtungen und Lackierungen, speziell die Klarlackierungen, auch in Schichtdicken > 40 µm herstellen, ohne dass Spannungsrisse auftreten.

Die erfindungsgemäßen gehärteten Massen eignen sich daher hervorragend als dekorative, schützende und/oder effektgebende, hoch kratzfeste Beschichtungen und Lackierungen von Karosserien von Fortbewegungsmitteln jeglicher Art (insbesondere mit Muskelkraft betriebene Fortbewegungsmittel, wie Fahrräder, Kutschen oder Draisinen, Fluggeräte, wie Flugzeuge, Helikopter oder Zeppeline, Schwimmkörper, wie Schiffe oder Bojen, Schienenfahrzeuge und Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen vor allem aus Polycarbonat, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpem und Gegenständen des täglichen Bedarfs.

Insbesondere können die erfindungsgemäßen Beschichtungen und Lackierungen, insbesondere die Klarlackierungen, in dem technologisch und ästhetisch besonders anspruchsvollen Gebiet der Automobilserienlackierung (OEM) eingesetzt werden. Dabei zeichnen sie sich vor allem durch eine besonders hohe Waschstraßenbeständigkeit und Kratzfestigkeit aus, was anhand des für die Praxis relevanten AMTEC-Waschstraßentests durch einen Restglanz (20°) nach DIN 67530 > 70% des Ausgangsglanzes untermauert werden kann.

### Beispiele

### Beispiel 1

### Die Herstellung eines Methacrylatcopolymerisats (A1)

In einem Dreihalskolben aus Glas, ausgerüstet mit Rührer, Rückflusskühler, Gaseinleitung und zwei Zulaufgefäßen, wurden 669,5 Gewichtsteile Ethoxypropanol vorgelegt. Die Vorlage wurde unter einer Stickstoffatmosphäre unter Rühren auf 130 °C erhitzt. Anschließend wurden der erste Zulauf, bestehend aus 377 Gewichtsteilen Glycidylmethacrylat, 658,5 Gewichtsteilen Methacryloxypropyltrimethoxysilan (Dynasilan ® MEMO) und 48,25 Gewichtsteilen 1,1'-Diphenylethylen, und der zweite Zulauf, bestehend aus 11,75 Gewichtsteilen tert.-Butyperoxy-2-ethylhexanoat und 134 Gewichtsteilen Ethoxypropanol, gleichzeitig beginnend unter Rühren langsam zur Vorlage zudosiert. Während der erste Zulauf während zwei Stunden zudosiert wurde, wurde der zweite Zulauf während 2,5 Stunden zudosiert. Die resultierende Reaktionsmischung wurde während fünf Stunden bei 130 °C unter Rühren nachpolymerisiert.

Das resultierende Methacrylatcopolymerisat (A2) wurde durch Gelpermeationschromatographie (Lösungsmittel: Tetrahydrofuran; interner Standard: Polystyrol) charakterisiert. Es wurden die folgenden Werte für Molekulargewicht und Uneinheitlichkeit erhalten:
Massenmittleres Molekulargewicht: 3.967 Dalton
Zahlenmittleres Molekulargewicht: 1.721 Dalton
Uneinheitlichkeit des Molekulargewichts: 2,3.

### Beispiel 2

### Die Herstellung des Methacrylatcopolymerisats (A2)

In einem Dreihalskolben aus Glas, ausgerüstet mit Rührer, Rückflusskühler, Gaseinleitung und zwei Zulaufgefäßen, wurden 150 Gewichtsteile Ethoxypropanol vorgelegt. Die Vorlage wurde unter Stickstoff und unter Rühren auf 130 °C erhitzt. Anschließend wurden der erste Zulauf, bestehend aus 70,36 Gewichtsteilen Glycidylmethacrylat, 122,93 Gewichtsteilen Methacryloxypropyltrimethoxysilan,0,7 Gewichtsteilen 2,5-Dihydrofuran, 02 Gewichtsteilen 1,1'-Diphenylethylen, und der zweite Zulauf, bestehend aus 21,02 Gewichtsteilen tert.-Butylperoxy-2-ethylhexanoat gleichzeitig beginnend unter Rühren zur Vorlage langsam zudosiert. Dabei wurde der erste Zulauf während zwei Stunden und der zweite Zulauf während 2,5 Stunden zudosiert. Die resultierende Reaktionsmischung wurde während fünf Stunden bei 130 ° C unter Rühren nachpolymerisiert.

Das resultierende Methacrylatcopolymerisat (A2) wurde mit Hilfe der Gelpermeationschromatographie (Lösungsmittel: Tetrahydrofuran; interner Standard: Polystyrol) charakterisiert. Es wurden die folgenden Werte für Molekulargewicht und Uneinheitlichkeit erhalten:
Massenmittleres Molekulargewicht: 3.960 Dalton
Zahlenmittleres Molekulargewicht: 1.701 Dalton
Uneinheitlichkeit des Molekulargewichts: 2,3.

### Herstellbeispiel 1

### Die Herstellung von kationisch stabilisierten Nanopartikeln

2,78 Gewichtsteile Böhmit-Nanopartikel (Disperal ® P 3 der Firma Sasol Germany) wurden unter Rühren zu einer Mischung aus 25 Gewichtsteilen 1 N Essigsäure und 2,5 Gewichtsteilen deionisiertem Wasser gegeben. Die resultierende Mischung wurde während drei Minuten im Ultraschallbad behandelt, bis sich die Böhmit-Nanopartikel gelöst hatten.

### Herstellbeispiel 2

### Die Herstellung von kationisch stabilisierten Nanopartikeln

Herstellbeispiel 1 wurde wiederholt, nur dass an Stelle der 1 N Essigsäure 0,1N Essigsäure verwendet wurde.

### Beispiel 3

### Die Herstellung von Klarlacken 3.1 bis 3.5 und Klarlackierungen 3.1 bis 3.5

### Allgemeine Herstellungsvorschrift:

In einem Rundkolben aus Glas, ausgestattet mit einem Magnetrührer, wurde die 10 Gew.-%-ige Lösung von Nanopartikeln gemäß Herstellbeispiel 1 oder die 10 Gew.-%-ige Lösung von Nanopartikeln gemäß Herstellbeispiel 2 vorgelegt. Zu dieser Vorlage wurden das Methacrylatcopolymerisat (A1) gemäß Beispiel 1 und deionisiertes Wasser hinzugegeben. Die resultierende Reaktionsmischung wurde während einer Stunde bei Raumtemperatur gerührt. Anschließend wurde Isopropanol hinzugegeben, und die so erhaltene Reaktionsmischung wurde während vier Stunden bei Raumtemperatur gerührt. Dabei klarte die milchig trübe Reaktionsmischung auf und es bildete sich ein transluzenter Klarlack.

Die Tabelle 1 gibt einen Überblick über die stoffliche Zusammensetzung der nach dieser allgemeinen Herstellungsvorschrift hergestellten Klarlacke 3.1 bis 3.5. Sie waren problemlos zu transportieren und lagerstabil.

**Tabelle 1: Die stoffliche Zusammensetzung der Klarlacke 3.1 bis 3.5**

| **Bestandteil** | **Gewichtsteile im Klarlack:** | | | | |
|---|---|---|---|---|---|
| | **3.1** | **3.2** | **3.3** | **3.4** | **3.5** |
| Nanopartikel-Lösung gemäß Herstellbeispiel 1 | 10,5 | 5,25 | 3,5 | - | - |
| Nanopartikel-Lösung gemäß Herstellbeispiel 2 | - | - | - | 6,13 | 7,0 |
| Lösung des Methacrylatcopolymerisats (A1) gemäß Beispiel 1 | 8,75 | 8,75 | 8,75 | 8,75 | 8,75 |
| Wasser | 5,53 | 4,42 | 4,42 | 3,48 | 1,77 |
| Isopropanol | 5,53 | 4,42 | 4,42 | 13,99 | 15,71 |

Die Klarlacke 3.1 bis 3.5 wurden pneumatisch mit Fließbecherpistolen auf Stahlbleche appliziert, die - in der angegebenen Reihenfolge übereinander liegend - mit einer Elektrotauchlackierung, einer Füllerlackierung und einem schwarzen Wasserbasislack vorlackiert waren. Die Nassschichtdicke der applizierten Klarlackschichten 3.1 bis 3.5 wurde so gewählt, dass die gehärteten Klarlackierungen eine Trockenschichtdicke von 40 µm aufwiesen. Die applizierten Klarlackschichten 3.1 bis 3.5 wurden während 10 Minuten bei Raumtemperatur abgelüftet und während 22 Minuten bei 140 °C thermisch gehärtet. Für die thermische Härtung wurden Umluftöfen der Firma Heraeus verwendet.

Es wurden hochglänzende, klare Klarlackierungen 3.1 bis 3.5 erhalten, die einen sehr guten Verlauf aufwiesen und frei von Spannungsrissen und Oberflächenstörungen wie Krater waren. Es wurden die Härte, die Flexibilität und die Kratzfestigkeit der Klarlackierungen 3.1 bis 3.5 untersucht.

Zur Durchführung des Stahlwolle-Kratztests wurde ein Hammer nach DIN 1041 (Gewicht ohne Stiel: 800 g; Stiellänge: 35 cm) verwendet. Die Prüftafeln wurden vor dem Test während 24 Stunden bei Raumtemperatur gelagert.

Die flache Hammerseite wurde mit einer Lage Stahlwolle bespannt und mit Tesakrepp an den hochgeschlagenen Seiten befestigt. Der Hammer wurde im rechten Winkel auf die Klarlackierungen aufgesetzt. Das Gewichtsstück des Hammers wurde ohne zu verkannten und ohne zusätzliche Körperkraft in einer Spur über die Oberfläche der Klarlackierung geführt.

Bei jeder Prüfung wurden 10 Doppelhübe per Hand ausgeführt. Nach jeder dieser Einzelprüfungen wurde die Stahlwolle ausgetauscht.

Nach der Belastung wurden die Prüfflächen mit einem weichen Tuch von den Stahlwolleresten gereinigt. Die Prüfflächen wurden visuell unter Kunstlicht ausgewertet und wie folgt benotet:

### Note Schädigungsbild

1 nicht vorhanden
2 gering
3 mäßig
4 mäßig bis mittel
5 stark
6 sehr stark

Die Auswertung erfolgte unmittelbar nach dem Versuchsende.

Die Tabelle 2 gibt einen Überblick über die Ergebnisse. Sie untermauern, dass die Klarlackierungen 3.1 bis 3.5 hart, flexibel und hochkratzfest waren.

**Tabelle 2: Die Härte, Flexibilität und Kratzfestigkeit der Klarlackierungen 3.1 bis 3.5**

| **Test** | **Klarlack:** | | | | |
|---|---|---|---|---|---|
| | **3.1** | **3.2** | **3.3** | **3.4** | **3.5** |
| Universalhärte bei 25,6 mN [N/mm²] | 92 | 79,2 | 77,8 | 77,8 | 92 |
| relative elastische | | | | | |
| Tiefenrückfederung (%) | 62,4 | 60,2 | 61,7 | 61,7 | 62,4 |
| Stahlwolle-Kratztest (Note) | 1-2 | 1-2 | 1-2 | 1-2 | 1-2 |

### Beispiel 4

### Die Herstellung der Klarlacke 4.1 bis 4.5 und der Klarlackierungen 4.1 bis 4.5

In einem Rundkolben, ausgestattet mit einem Magnetrührer, wurden die 10 Gew.-%-ige Lösung von Nanopartikeln gemäß Herstellbeispiel 1 und Wasser vorgelegt. Zur Vorlage wurde unter Rühren das Methacrylatcopolymerisat (A2) gemäß Beispiel 2 hinzugegeben. Die resultierende Reaktionsmischung wurde während einer Stunde bei Raumtemperatur gerührt. Anschließend wurde Isopropanol dazugegeben, und die resultierende Reaktionsmischung wurde während vier Stunden bei Raumtemperatur gerührt. Dabei klarte die milchig trübe Reaktionsmischung auf und es bildete sich ein transluzenter Klarlack.

Die Tabelle 3 gibt einen Überblick über die stoffliche Zusammensetzung der nach dieser allgemeinen Herstellungsvorschrift hergestellten Klarlacke 4.1 bis 4.5. Sie waren problemlos zu transportieren und lagerstabil.

**Tabelle 3: Die stoffliche Zusammensetzung der Klarlacke 4.1 bis 4.5**

| **Bestandteil** | **Gewichtsteile in Klarlack:** | | | | |
|---|---|---|---|---|---|
| | **4.1** | **4.2** | **4.3** | **4.4** | **4.5** |
| Nanopartikel-Lösung gemäß Herstellbeispiel 1 | 1 | 1 | 1 | 1 | 1 |
| Lösung des Methacrylatcopolymerisats (A2) gemäß Beispiel 2 | 3 | 3,5 | 4 | 4,5 | 5 |
| Wasser | 1,58 | 1,58 | 1,58 | 1,58 | 1,58 |
| Isopropanol | 1,58 | 1,58 | 1,58 | 1,58 | 1,58 |

Die Klarlacke 4.1 bis 4.5 wurden pneumatisch mit Fließbecherpistolen auf Stahlbleche appliziert, die - in der angegebenen Reihenfolge übereinander liegend - mit einer Elektrotauchlackierung, einer Füllerlackierung und einem schwarzen Wasserbasislack vorlackiert waren. Die Nassschichtdicke der applizierten Klarlackschichten 4.1 bis 4.5 wurde so gewählt, dass die gehärteten Klarlackierungen 4.1 bis 4.5 eine Trockenschichtdicke von 20 µm aufwiesen. Die applizierten Klarlackschichten 4.1 bis 4.5 wurden während 10 Minuten bei Raumtemperatur abgelüftet und während 22 Minuten bei 140 °C thermisch gehärtet. Für die thermische Härtung wurden Umluftöfen der Firma Heraeus verwendet.

Es wurden hochglänzende, klare Klarlackierungen 4.1 bis 4.5 erhalten, die einen sehr guten Verlauf aufwiesen und frei von Spannungsrissen und Oberflächenstörungen wie Krater waren. Es wurden die Kratzfestigkeit nach dem Stahlwolle-Kratztest und die Chemikalienstabilität nach BART der Klarlackierungen 4.1 bis 4.5 untersucht.

Der BART (BASF ACID RESISTANCE TEST) diente der Ermittlung der Beständigkeit einer Klarlackierung gegen Säuren, Laugen und Wassertropfen. Dabei wurde die Klarlackierung auf einem Gradientenofen nach der Einbrennung während 30 min bei 40°C einer Temperaturbelastung ausgesetzt. Zuvor wurden die Testsubstanzen (Schwefelsäure 10%-ig, 36%-ig; schweflige Säure 6%-ig, Salzsäure 10%-ig, Natronlauge 5%-ig, VE (= voll entsalztes bzw. deionisiertes) Wasser-1,2,3 bzw. 4 Tropfen) definiert mit einer Dosierpipette aufgebracht. Im Anschluss an die Einwirkung der Substanzen wurden diese unter fließendem Wasser entfernt und die Beschädigungen nach 24 h entsprechend einer vorgegebenen Skala visuell beurteilt:

| **Benotung** | **Aussehen** |
|---|---|
| 0 | kein Defekt |
| 1 | leichte Markierung |
| 2 | Markierung / Vermattung / keine Erweichung |
| 3 | Markierung / Vermattung / Farbtonveränderung / Erweichung |
| 4 | Risse / beginnende Durchätzung |
| 5 | Klarlack entfernt |

Es wurde jede einzelne Markierung (Spot) ausgewertet und das Ergebnis in Form einer Note für jede Testsubstanz festgehalten.

Die Tabelle 4 gibt einen Überblick über die Ergebnisse. Sie untermauern, dass die Klarlackierungen 4.1 bis 4.5 gegenüber Chemikalien stabil und hoch kratzfest waren.

**Tabelle 4: Die Chemikalienstabilität und Kratzfestigkeit der Klarlackierungen 4.1 bis 4.5**

| **Test** | **Klarlack:** | | | | |
|---|---|---|---|---|---|
| | **4.1** | **4.2** | **4.3** | **4.4** | **4.5** |
| Stahlwolle-Kratztest (Note) | 1-2 | 1-2 | 1-2 | 1-2 | 2 |
| | | | | | |
| BART | | | | | |
| Schwefelsäure 10%ig | 0 | 0 | 0 | 0 | 0 |
| Schwefelsäure 36%ig | 0 | 0 | 0 | 0 | 0 |
| Salzsäure 10%ig | 1 | 1 | 1 | 1 | 1 |
| Schweflige Säure 6%ig | 0 | 0 | 0 | 0 | 0 |
| Natronlauge 5 %ig | 0 | 0 | 0 | 0 | 0 |
| VE-Wasser | 0 | 0 | 0 | 0 | 0 |

### Beispiel 5

### Die Herstellung eines Kondensats des Methacrylatcopolymerisats (A1)

In einem Rundkolben aus Glas, ausgestattet mit Rührer, Rückflusskühler, Thermometer und Außenheizung, wurden 1.502,7 Gewichtsteile des Methacrylatcopolymerisats (A1) des Beispiels 1, 2.693,7 Gewichtsteile Isopropanol und 365,4 Gewichtsteile 0,1 N Essigsäure vorgelegt und während drei Stunden unter Rühren auf 70 ° C erhitzt. Anschließend wurden 1.394,4 Gewichtsteile Solventnaphtha ® hinzugegeben, wonach die resultierende Reaktionsmischung noch weitere fünf Minuten bei 70 ° C gerührt wurde. Danach wurden die niedrigsiedenden Bestandteile, insbesondere das Wasser, bei 70 ° C im Vakuum abdestilliert (3.737,9 Gewichtsteile), und es wurden 2.218,3 Gewichtsteile des Kondensats erhalten. Die Restgehalte an Wasser (0,2 Gew.-%) und Isopropanol (2,5 Gew.-%) wurden gaschromatographisch bestimmt. Das Kondensat war bei 40 ° C mehr als vier Wochen lagerstabil. Es war hervorragend für die Herstellung von Klarlackierungen geeignet.

### Beispiel 6

### Die Herstellung der Zweikomponentenklarlacke 6.1 und 6.2 und der Klarlackierungen 6.1 und 6.2

Zur Herstellung des Zweikomponentenklarlacks 6.1 wurden 100 Gewichtsteile des Kondensats des Beispiels 5, mit 20 Gewichtsteilen Decanol ® EX-252 (Handelsprodukt der Firma Nagase Chemtex Corporation, Osaka, Japan) und 1 Gewichtsteil eines handelsüblichen Verlaufmittels (Byk ® 301 der Firma Byk Chemie) vermischt.

Zur Herstellung des Zweikomponentenklarlacks 6.2 wurden an Stelle von 20 Gewichtsteilen 30 Gewichtsteile Decanol ® EX-252 verwendet.

Den resultierenden Mischungen 6.1 und 6.2 wurden jeweils 9,7 Gewichtsteile des Katalysators des Herstellbeispiels 1 hinzugefügt. Die resultierenden Zweikomponentenklarlacke 6.1 und 6.2 wurden pneumatisch mit Fließbecherpistolen auf Stahlbleche appliziert, die - in der angegebenen Reihenfolge übereinander liegend - mit einer Elektrotauchlackierung, einer Füllerlackierung und einem schwarzen Wasserbasislack vorlackiert waren. Die Nassschichtdicke der applizierten Klarlackschichten 6.1 und 6.2 wurde so gewählt, dass die gehärteten Klarlackierungen 6.1 und 6.2 eine Trockenschichtdicke von 40 µm aufwiesen. Die applizierten Klarlackschichten 6.1 und 6.2 wurden während 10 Minuten bei Raumtemperatur abgelüftet, während 5 Minuten bei 60 °C getrocknet und während 22 Minuten bei 140 °C thermisch gehärtet. Für die thermische Härtung wurden Umluftöfen der Firma Heraeus verwendet.

Die Kratzfestigkeit der Klarlackierungen 6.1 und 6.2 wurde mit Hilfe des Waschstraßentests nach AMTEC ermittelt. Ihre Chemikalienstabilität wurde mit Hilfe des Gradientenofentests bestimmt. Die Ergebnisse finden sich in der Tabelle 5. Sie untermauern die hohe Kratzfestigkeit und Chemikalienstabilität der Klarlackierungen 6.1 und 6.2.

**Tabelle 5: Die Kratzfestigkeit und Chemikalienstabilität der Klarlackierungen 6.1 und 6.2**

| **Test** | **Klarlack:** | |
|---|---|---|
| | **6.1** | **6.2** |
| Gradientenofentest: | | |
| Beginn der Schädigung nach 24 Stunden (° C) | | |
| Natronlauge | 42 | > 75 |
| Schwefelsäure | 46 | 47 |
| destilliertes Wasser | > 75 | > 75 |
| Pankreatin | 55 | 60 |
| Baumharz | > 75 | > 75 |
| | | |
| AMTEC: | | |
| Glanz bei 20 ° nach DIN 67530 (Einheiten): | | |
| Anfangsglanz | 83 | 84 |
| Glanz nach Schädigung: | | |
| ohne Reinigung | 54 | 50 |
| mit Reinigung | 64 | 76 |
| Restglanz (%) | 77 | 80 |

## Patentansprüche

1. Hydrolysate und/oder Kondensate von Epoxid- und Silangruppen enthaltenden Oligomeren und Polymeren (A), wobei die Oligomere und Polymere (A) aus der Gruppe der Copolymerisate olefinisch ungesättigter Monomere ausgewählt sind und die Hydrolysate und/oder Kondensate herstellbar sind, indem man mindestens ein mindestens eine Epoxidgruppe (a1) und mindestens eine hydrolysierbare Silangruppe (a2) enthaltendes Oligomer und/oder Polymer (A) bei einem pH-Wert < 7 hydrolysiert und/oder kondensiert, **dadurch gekennzeichnet, dass** die Hydrolysate und/oder Kondensate in Gegenwart mindestens einer Art von kationisch stabilisierten Nanopartikeln hergestellt sind.

2. Hydrolysate und/oder Kondensate nach Anspruch 1, **dadurch gekennzeichnet, dass** das Oligomer und/oder Polymer (A) mit Hilfe eines Sol-Gel-Verfahrens kondensierbar ist.

3. Hydrolysate und/oder Kondensate nach Anspruch 1 oder 2, **dadurch gekennzeichnet, dass** die Hydrolysate und/oder Kondensate durch Hydrolyse und Hydrolyse und/oder Kondensation des Oligomeren und/oder Polymeren (A) herstellbar sind.

4. Hydrolysate und/oder Kondensate nach Anspruch 1, **dadurch gekennzeichnet, dass** das Oligomer und das Polymer (A) (Meth)Acrylatcopolymerisate sind.

5. Hydrolysate und/oder Kondensate nach einem der Ansprüche 1 bis 4, **dadurch gekennzeichnet, dass** das Molverhältnis von Epoxidgruppen (a1) zu hydrolysierbaren Silangruppen (a2) in einem Oligomer oder Polymer (A) bei 1,5:1 bis 1:1,5 liegt.

6. Hydrolysate und/oder Kondensate nach einem der Ansprüche 1 bis 5, **dadurch gekennzeichnet, dass** die hydrolysierbaren Silangruppen (a2) die allgemeine Formel II haben:
**-SiRₘR¹ₙ** **(II),**
worin die Indices und die Variablen die folgende Bedeutung haben:
R einbindiges, hydrolysierbares Atom oder einbindige, hydrolysierbare Gruppe;
R¹ einbindiger, nicht hydrolysierbarer Rest;
m ganze Zahl von 1 bis 3 und
n 0 oder 1 oder 2
mit der Maßgabe, dass m+n=3.

7. Hydrolysate und/oder Kondensate nach Anspruch 6, **dadurch gekennzeichnet, dass** das einbindige, hydrolysierbare Atom R aus der Gruppe, bestehend aus Wasserstoff, Fluor, Chlor, Brom und lod, und die einbindige, hydrolysierbare Gruppe R aus der Gruppe, bestehend aus Hydroxylgruppen, Aminogruppen -NH₂ und Gruppen der allgemeinen Formel III:
**R¹-X-** (III),
worin die Variablen die folgende Bedeutung haben:
X Sauerstoffatom, Schwefelatom, Carbonylgruppe, Carboxylgruppe, Thiocarbonsäure-S-estergruppe, Thiocarbonsäure-O-estergruppe oder Aminogruppe -NH- oder -NR¹-;
R¹ einbindiger, organischer Rest, enthaltend mindestens eine Gruppe, ausgewählt aus der Gruppe, bestehend aus substituierten und unsubstituierten, verzweigten und unverzweigten, cyclischen und nicht cyclischen Alkyl-, Alkenyl- und Alkinyl- sowie substituierten und unsubstituierten Arylgruppen, oder hieraus bestehend;
ausgewählt sind.

8. Hydrolysate und/oder Kondensate nach einem der Ansprüche 1 bis 7, **dadurch gekennzeichnet, dass** das Oligomer und das Polymer (A) durch Copolymerisation mindestens eines, mindestens eine Epoxidgruppe (a1) enthaltenden Monomeren (a1) mit mindestens einem, mindestens eine hydrolysierbare Silangruppe (a2) enthaltenden Monomeren (a2) herstellbar sind.

9. Hydrolysate und/oder Kondensate nach Anspruch 8, **dadurch gekennzeichnet, dass** die Monomeren (a1) und (a2) mit mindestens einem weiteren, von (a1) und (a2) verschiedenen Monomeren (a3) copolymerisierbar sind.

10. Hydrolysate und/oder Kondensate nach Anspruch 8 oder 9, **dadurch gekennzeichnet, dass** die Monomeren (a1), (a2) und (a3) mindestens eine olefinisch ungesättigte Gruppe enthalten.

11. Hydrolysate und/oder Kondensate nach einem der Ansprüche 8 bis 10, **dadurch gekennzeichnet, dass** die olefinisch ungesättigten Gruppen Methacrylat- und/oder Acrylatgruppen sind.

12. Hydrolysate und/oder Kondensate nach einem der Ansprüche 8 bis 11, **dadurch gekennzeichnet, dass** das Oligomer und das Polymer (A) durch radikalische Copolymersisation der Monomeren (a1), (a2) und (a3) herstellbar sind.

13. Hydrolysate und/oder Kondensate nach einem der Ansprüche 8 bis 12, **dadurch gekennzeichnet, dass** das Molverhältnis von Monomer (a1) zu Monomer (a2) bei 1,5:1 bis 1:1,5 liegt.

14. Verfahren zur Herstellung der Hydrolysate und/oder Kondensate gemäß einem der Ansprüche 1 bis 13, **dadurch gekennzeichnet, dass** man die Oligomeren und/oder Polymeren (A) bei einem pH-Wert < 7 hydrolysiert und/oder kondensiert.

15. Verfahren nach Anspruch 14, **dadurch gekennzeichnet, dass** man die Hydrolyse und/oder Kondensation in Gegenwart einer organischen Säure durchführt.

16. Verfahren nach Anspruch 14 oder 15, **dadurch gekennzeichnet, dass** man die Hydrolyse und/oder Kondensation bei -10 bis +50°C durchführt.

17. Verwendung der Hydrolysate und/oder Kondensate gemäß einem der Ansprüche 1 bis 13 und der nach dem Verfahren gemäß einem der Ansprüche 14 bis 16 hergestellten Hydrolysate und/oder Kondensate als härtbare Massen oder zu deren Herstellung.

18. Verwendung nach Anspruch 17, **dadurch gekennzeichnet, dass** man die kationisch stabilisierten Nanopartikel als Katalysatoren für die Härtung der härtbaren Massen verwendet.

## Claims

1. Hydrolysates and/or condensates of epoxy- and silane-functional oligomers and polymers (A), the oligomers and polymers (A) being selected from the group of the copolymers of olefinically unsaturated monomers and the hydrolysates and/or condensates being preparable by hydrolyzing and/or condensing at least one oligomer and/or polymer (A) containing at least one epoxide group (a1) and at least one hydrolyzable silane group (a2) at a pH < 7, **characterized in that** the hydrolysates and/or condensates are prepared in the presence of at least one kind of cationically stabilized nanoparticles.

2. Hydrolysates and/or condensates according to Claim 1, **characterized in that** the oligomer and/or polymer (A) is condensable by means of a sol-gel process.

3. Hydrolysates and/or condensates according to Claim 1 or 2, **characterized in that** the hydrolysates and/or condensates are preparable by hydrolysis and/or condensation of the oligomer and/or polymer (A).

4. Hydrolysates and/or condensates according to Claim 1, **characterized in that** the oligomer and the polymer (A) are (meth)acrylate copolymers.

5. Hydrolysates and/or condensates according to any one of Claims 1 to 4, **characterized in that** the molar ratio of epoxide groups (a1) to hydrolyzable silane groups (a2) in an oligomer or polymer (A) is from 1.5 : 1 to 1 : 1.5.

6. Hydrolysates and/or condensates according to any one of Claims 1 to 5, **characterized in that** the hydrolyzable silane groups (a2) have the general formula II:
**-SiRₘR¹ₙ** (II),
in which the indices and variables are defined as follows:
R is a monovalent hydrolyzable atom or monovalent hydrolyzable group;
R¹ is a monovalent nonhydrolyzable radical;
m is an integer from 1 to 3, and
n is 0 or 1 or 2
with the proviso that m + n = 3.

7. Hydrolysates and/or condensates according to Claim 6, **characterized in that** the monovalent hydrolyzable atom R is selected from the group consisting of hydrogen, fluorine, chlorine, bromine, and iodine and the monovalent hydrolyzable group R is selected from the group consisting of hydroxyl groups, amino groups -NH₂, and groups of the general formula III:
**R¹-X-** (III),
in which the variables are defined as follows:
X is oxygen atom, sulfur atom, carbonyl group, carboxyl group, thiocarboxylic S-ester group, thiocarboxylic O-ester group or amino group-NH- or -NR¹-,
R¹ is a monovalent organic radical comprising or consisting of at least one group selected from the group consisting of substituted and unsubstituted, branched and unbranched, cyclic and noncyclic alkyl, alkenyl, and alkynyl groups and also substituted and unsubstituted aryl groups.

8. Hydrolysates and/or condensates according to any one of Claims 1 to 7, **characterized in that** the oligomer and the polymer (A) are preparable by copolymerizing at least one monomer (a1) containing at least one epoxide group (a1) with at least one monomer (a2) containing at least one hydrolyzable silane group (a2).

9. Hydrolysates and/or condensates according to Claim 8, **characterized in that** the monomers (a1) and (a2) are copolymerizable with at least one further monomer (a3) other than (a1) and (a2).

10. Hydrolysates and/or condensates according to Claim 8 or 9, **characterized in that** the monomers (a1), (a2), and (a3) contain at least one olefinically unsaturated group.

11. Hydrolysates and/or condensates according to any one of Claims 8 to 10, **characterized in that** the olefinically unsaturated groups are methacrylate and/or acrylate groups.

12. Hydrolysates and/or condensates according to any one of Claims 8 to 11, **characterized in that** the oligomer and the polymer (A) are preparable by free-radical copolymerization of the monomers (a1), (a2), and (a3).

13. Hydrolysates and/or condensates according to any one of Claims 8 to 12, **characterized in that** the molar ratio of monomer (a1) to monomer (a2) is from 1.5 : 1 to 1 : 1.5.

14. Process for preparing the hydrolysates and/or condensates according to any one of Claims 1 to 13, **characterized in that** the oligomers and/or polymers (A) are hydrolyzed and/or condensed at a pH < 7.

15. Process according to Claim 14, **characterized in that** the hydrolysis and/or condensation is conducted in the presence of an organic acid.

16. Process according to Claim 14 or 15, **characterized in that** the hydrolysis and/or condensation is conducted at from -10 to +50°C.

17. Use of the hydrolysates and/or condensates according to any one of Claims 1 to 13 and of the hydrolysates and/or condensates prepared by the process according to any one of Claims 14 to 16 as curable compositions or for preparing them.

18. Use according to Claim 17, **characterized in that** the cationically stabilized nanoparticles are used as catalysts for curing the curable compositions.

## Revendications

1. Produits d'hydrolyse et/ou produits de condensation d'oligomères et de polymères (A) contenant des groupes époxy et silanes, les oligomères et polymères (A) étant choisis dans le groupe des copolymérisats de monomères à insaturation oléfinique et les produits d'hydrolyse et/ou produits de condensation pouvant être préparés par condensation et/ou hydrolyse à un pH < 7 d'au moins un oligomère et/ou polymère (A) contenant au moins un groupe époxy (a1) et au moins un groupe silane hydrolysable (a2), **caractérisés en ce que** les produits d'hydrolyse et/ou produits de condensation sont préparés en présence d'au moins un type de nanoparticules stabilisées par voie cationique.

2. Produits d'hydrolyse et/ou produits de condensation selon la revendication 1, **caractérisés en ce que** l'oligomère et/ou le polymère (A) est condensable à l'aide d'un procédé sol-gel.

3. Produits d'hydrolyse et/ou produits de condensation selon la revendication 1 ou 2, **caractérisés en ce que** les produits d'hydrolyse et/ou produits de condensation peuvent être préparés par hydrolyse et/ou condensation de l'oligomère et/ou du polymère (A).

4. Produits d'hydrolyse et/ou produits de condensation selon la revendication 1, **caractérisés en ce que** l'oligomère et le polymère (A) sont des copolymérisats de (méth)acrylate.

5. Produits d'hydrolyse et/ou produits de condensation selon l'une quelconque des revendications 1 à 4, **caractérisés en ce que** le rapport molaire des groupes époxy (a1) aux groupes silane hydrolysables (a2) dans un oligomère ou polymère (A) vaut de 1,5 : 1 à 1:1,5.

6. Produits d'hydrolyse et/ou produits de condensation selon l'une quelconque des revendications 1 à 5, **caractérisés en ce que** les groupes silane hydrolysables (a2) ont la formule générale II :
-SiRₘR¹ₙ (II),
dans laquelle les indices et les variables ont la signification suivante :
R représente un atome hydrolysable à une liaison ou un groupe hydrolysable à une liaison ;
R¹ représente un radical non hydrolysable à une liaison ;
m représente un nombre entier valant de 1 à 3 et
n est 0 ou 1 ou 2,
étant entendu que m+n = 3.

7. Produits d'hydrolyse et/ou produits de condensation selon la revendication 6, **caractérisés en ce que** l'atome hydrolysable à une liaison R est choisi dans le groupe constitué par les atomes d'hydrogène, de fluor, de chlore, de brome et d'iode et le groupe hydrolysable à une liaison R est choisi dans le groupe constitué par les groupes hydroxy, les groupes amino -NH₂ et les groupes de formule générale III :
R¹-X- (III)
dans laquelle les variables ont la signification suivante :
X représente un atome d'oxygène, un atome de soufre, un groupe carbonyle, un groupe carboxy, un groupe S-ester d'acide thiocarboxylique, un groupe 0-ester d'acide thiocarboxylique ou un groupe amino -NH- ou -NR¹- ;
R¹ représente un radical organique à une liaison, contenant au moins un groupe choisi dans le groupe constitué par des groupes alkyle, alcényle et alcynyle substitués et non substitués, ramifiés et non ramifiés, cycliques et acycliques ainsi que des groupes aryle substitués et non substitués, ou consistant en un tel groupe.

8. Produits d'hydrolyse et/ou produits de condensation selon l'une quelconque des revendications 1 à 7, **caractérisés en ce que** l'oligomère et le polymère (A) peuvent être préparés par copolymérisation d'au moins un monomère (a1) contenant au moins un groupe époxy (a1) avec au moins un monomère (a2) contenant au moins un groupe silane hydrolysable (a2).

9. Produits d'hydrolyse et/ou produits de condensation selon la revendication 8, **caractérisés en ce que** les monomères (a1) et (a2) sont copolymérisables avec au moins un autre monomère (a3) différent de (a1) et (a2).

10. Produits d'hydrolyse et/ou produits de condensation selon la revendication 8 ou 9, **caractérisés en ce que** les monomères (a1), (a2) et (a3) contiennent au moins un groupe à insaturation oléfinique.

11. Produits d'hydrolyse et/ou produits de condensation selon l'une quelconque des revendications 8 à 10, **caractérisés en ce que** les groupes à insaturation oléfinique sont des groupes acrylate et/ou méthacrylate.

12. Produits d'hydrolyse et/ou produits de condensation selon l'une quelconque des revendications 8 à 11, **caractérisés en ce que** l'oligomère et le polymère (A) peuvent être préparés par copolymérisation radicalaire des monomères (a1), (a2) et (a3).

13. Produits d'hydrolyse et/ou produits de condensation selon l'une quelconque des revendications 8 à 12, **caractérisés en ce que** le rapport molaire du monomère (a1) au monomère (a2) vaut de 1,5:1 à 1:1,5.

14. Procédé pour la préparation des produits d'hydrolyse et/ou produits de condensation selon l'une quelconque des revendications 1 à 13, **caractérisé en ce qu'**on hydrolyse et/ou condense les oligomères et/ou polymères (A) à un pH < 7.

15. Procédé selon la revendication 14, **caractérisé en ce qu'**on effectue l'hydrolyse et/ou la condensation en présence d'un acide organique.

16. Procédé selon la revendication 14 ou 15, **caractérisé en ce qu'**on effectue l'hydrolyse et/ou la condensation à une température de -10 à +50 °C.

17. Utilisation des produits d'hydrolyse et/ou produits de condensation selon l'une quelconque des revendications 1 à 13 et des produits d'hydrolyse et/ou produits de condensation préparés selon l'une quelconque des revendications 14 à 16, en tant que matières durcissables ou pour leur production.

18. Utilisation selon la revendication 17, **caractérisée en ce qu'**on utilise les nanoparticules stabilisées par voie cationique en tant que catalyseurs pour le durcissement des matières durcissables.
